# EUROPEAN PATENT APPLICATION

(11) **EP 1 364 826 A1**
(43) Date of publication of application: **26.11.2003**
(21) Application number: 03076520.0
(22) Date of filing: 21.05.2003
(51) Int. Cl.: B60M 1/28

(54) **Overhead supply line renewal device**

(30) Priority: 21.05.2002 NL 1020642; 04.10.2002 NL 1021580; 20.05.2003 NL 1023477
(71) Applicant: Volker Stevin Rail & Traffic Materieel BV, 4131 NJ Vianen (NL)
(72) Inventor: Bosch, Jan Willem, 4131 NJ Vianen (NL)
(74) Representative: Assendelft, Jacobus H.W.

(57) **Abstract**

The invention concerns an overhead supply line renewal device to renew an overhead supply line (14), displacable along the track en provided with a unit (1) to remove old supply line (14) and a unit (3) to supply new supply line (4) and with a unit (2) to disconnect the old supply line (14) from the suspension or mounting the new supply line (4) to the suspension, respectively.

## Description

The invention is concerned with an overhead supply line renewal device to renew the overhead supply line of a train, streetcar or subway track.

The known overhead supply line renewal device (herafter abbreviated by "renewal device") is characterised by a great deal of manual labour during operation. With the invention an improved renewal of the overhead supply line is provided. The object of the invention is versatile. According to one aspect the required manual labour is simplified/decreased, wich a.o. leads to a shorter out of service of the track or increased capacity.

Particularly the invention is convenient for an overhead supply line which is through (vertical) supporting ropes along its length directly (suspending) fixed to the suspension rope which extends (waving) between the overhead supply line poles. This single suspension wire system is a.o. generally applied in the Netherlands for train traffic. Besides, the invention is also applicable to different such systems, such as the double suspension wire system, frequently used in France, wherein the overhead supply line is (suspending) fixed to a horizontal auxiliary suspension rope through (relatively short) supporting ropes along its length, wherein said horizontal auxiliary suspension rope is (suspending) fixed to the suspension rope which extends (waving) between the overhead supply line poles through longer supporting ropes along its length.

With the single wire system it was typical in the past to, during renewal of the supply line, stand on an advancing platform and lift the old line by hand en hold it temporary in said lifted position by hooking to temporary (slightly shorter) vertical supporting ropes, whereafter the original (now tension less) supporting ropes are unscrewed from the old supply line en subsequently the old line is hooked free from the temporary supporting ropes and is removed. During a separate operation, standing on an advancing platform, the new supply line is first hooked to the temporary supporting ropes, subsequently the original supporting ropes fixedly screwed thereto, whereafter the new supply line is hooked free from the temporary supporting ropes en thus lowered to its operating position, while the temporary supporting ropes are removed from the suspension rope.

With the double wire system it was typical in the past to, during renewal of the supply line, stand on an advancing platform and in a single operation manually apply clips to bring the old supply line closer to the auxiliary suspension rope to subsequently unscrew the old supply line from the short supporting ropes and remove it and subsequently pass the clips over to the simultaneously supplied new supply line to therafter fixedly tighten the new supply line to the short supporting ropes.

According to one aspect of the invention the renewal device contains a lifting means with which the distance between the old and/or new supply line and the suspension rope of auxiliary suspension rope is decreased, wherein said means is preferably designed such that it advances along the track during operation. Thus it is no longer required, to make use of clips or temporary supporting ropes (i.e. stationary means) for assembly/disassembly of the supporting ropes and/or the supply line. Thus, substantial savings in required manual labour is possible.

In connection with particularly processing a double supply line, the renewal device according to the invention has in another aspect a positioning means with which the transverse/sideways position of the one or more supply lines is managed, wherein said means is preferably designed such that it advances along the track during operation. Thus the tightening of particularly a double supply line to the supporting ropes is substantially simplified while its correct positioning is ensured.

In the following the invention is further illustrated by way of a non-limiting embodiment, refering to the attached schematical drawing, which shows in:
Fig. 1 a side view of the complete renewal device;
Fig. 2 a perspective view of the winding-out unit;
Fig. 3 a view of the giraffe;
Fig. 4 a view of the platform unit;
Fig. 5 a perspective view of the means for positioning and lifting of the supply line; and
Fig. 6-9 an alternative.

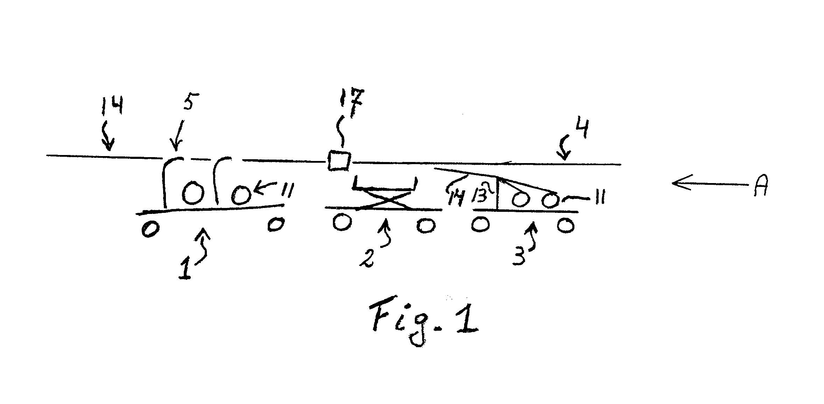

Fig. 1 shows a processing train with three wagons; the front having a winding-out 1, the middle a platform 2 and the back a winding-in 3 unit. During operation the train advances according to arrow A, such that the overhead supply line is old in front of and new at the back of the train.

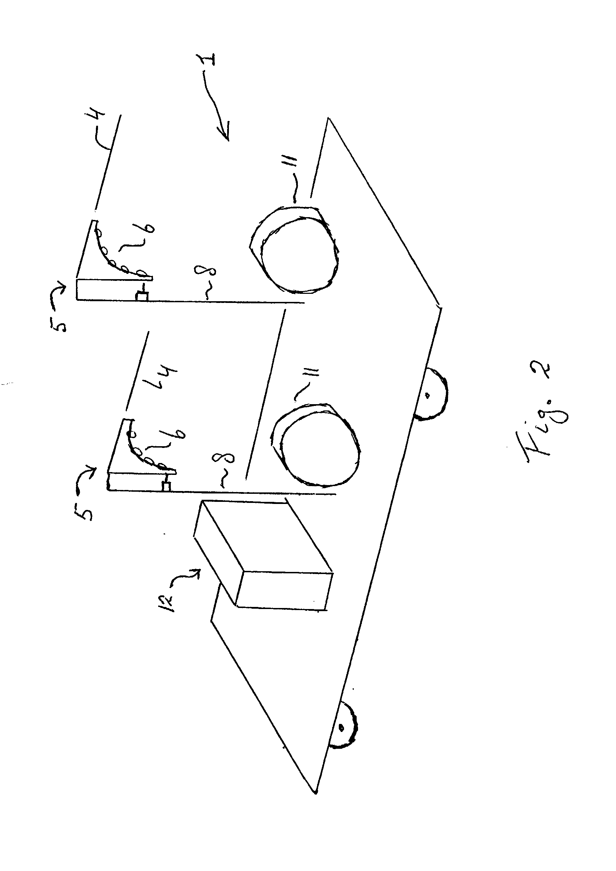

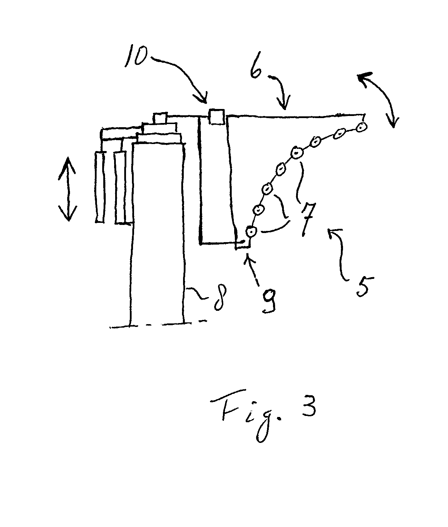

The winding-out unit 1 (fig. 2) has two drums 11, which are rotatably driven in both directions, and each contains new supply line 4. Through a so called giraffe 5 each line 4 is brought to the correct level above the track. The giraffe 5 (fig. 3) has a structure known as such with a level adaptable head 6, provided with a plurality of free rotating guide wheels 7, along which the line 4 (not shown) is guided. The head 6 is mounted to a three part vertical telescoping pole 8, which is shown in fig. 2 in its completely extended and in fig. 3 in its completely retracted position. The head 6 is at its lower end 9 pivoting mounted to the pole 8 and at its top end 10 through a tension sensor mounted to the pole 8, such that the tension acting in the line 4 running over the guides 7 can be recorded. It is appreciated that the pivoting connection at 9 allows for pivoting of the top end 10 towards and away from the pole 8. It is obvious to the skilled person, and thus not further elaborated, how the recording of the tension sensor is supplied to a control unit 12 which is designed to control the spinning speed of the relevant drum 11 such that the actual tension in the line 4 can be maintained at a predetermined target value or within a certain range during operation.

As shown, the winding-out unit 1 is double for reasons of the railway track system with double supply line. For a track with single supply line, one of the two untis 1 can be removed. Besides both units 1 can be mutual in line next to each other, in stead of staggered in the direction of advancement as shown in fig. 2; this is. o.a., dependent from the available space at the wagon.

To save space, the line 4 extends from the drum 11 immediately upward towards the head 6. This is different from known systems, wherein a head, comparable to head 6 but then inverted, at the bottom of pole 8 is mounted such that the line 4 from the drum 11 extends first (almost) horizontal towards the pole 8 and then along the guides 7 at the lower head curves upward towards the top head 6. As such, the drum 11 more or less replaces the lower head with this invention.

The winding-in unit 3 has also two rotatably driven drums 11 (or a single drum 11 with a single supply line system) and a line guide 13 with which old line 14 is uniformly spread over the drum 11 during winding in. It is appreciated that from the double line each time one goes to one of the drums 11 of the winding-in unit 3.

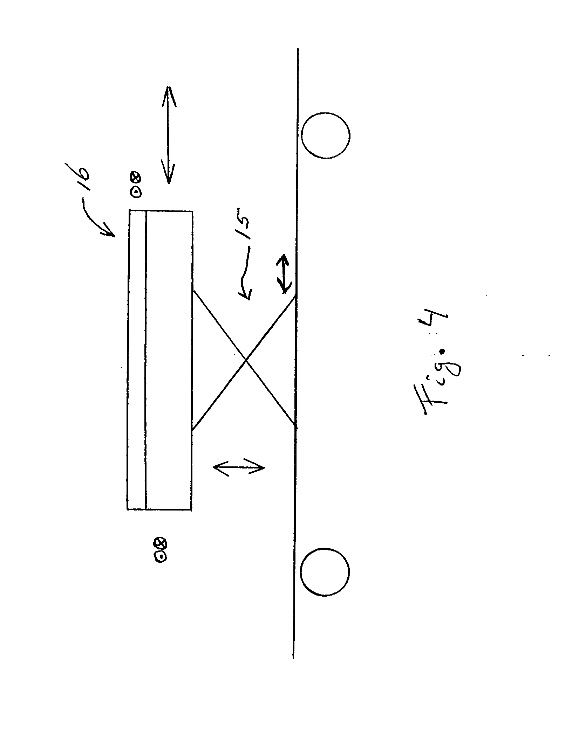

The platform unit 2 (fig. 4) has a (scissors like) lifting system 15 with a structure known as such. The platform 16 contains a telescoping part (not shown) such that its length can be extended. Also it can be pivoted over 90° around a vertical axis to take a perpendicular position (not shown).

In the path from the giraffe 5 towards the platform 16 there is a supply line processing unit 17, having a supply line lifting means and a supply line positioning means.

The supply line lifting means has two supports at a fixed level above each other, wherein the old line 14 slidably rests on the upper support 18 and the new line 4 slidably rests on the lower support 19. The level of the supports 18 and 19 is higher than that of the operation level of the supply lines after completion of the installation, such that easy (dis)assembly of the supporting ropes (not shown) is possible. The width of the supports 18, 19 is sufficient to easily take up sideways displacement of the supply line due to the typical horizontal zig-zag path (±600 mm) thereof for wearing protection of the pantograph.

The supply line positioning means has a sideways freely displacable body 20 with two upwardly open grooves at a mutual distance, with a new supply line 4 in each, and the sideways displacement of said body 20 following bodies 21 with sideways open grooves with in each a new supply line 4, such that the new supply lines 4 are both sideways and upward positively and reliably positioned.

It is appreciated that the invention also covers alternative embodiments, such as wherein one or more of the parts 18-21 have a larger mutual (horizontal) distance and/or are positioned elsewhere in the procedure of removing the old supply line and mounting the new supply line. E.g. the support 18 is in front of the front of the platform 16, while the support 19 and the guides 20, 21 are somewhere between the front and back of the platform (e.g. half way between its length).

In stead of a train of railway wagons, the supply line renewal device can e.g. be obtained from road/track vehicles.

The unit 17 or one of its elements can be positioned in the path from the front to the back of the platform 16, or from the platform 16 to the winding-in 3.

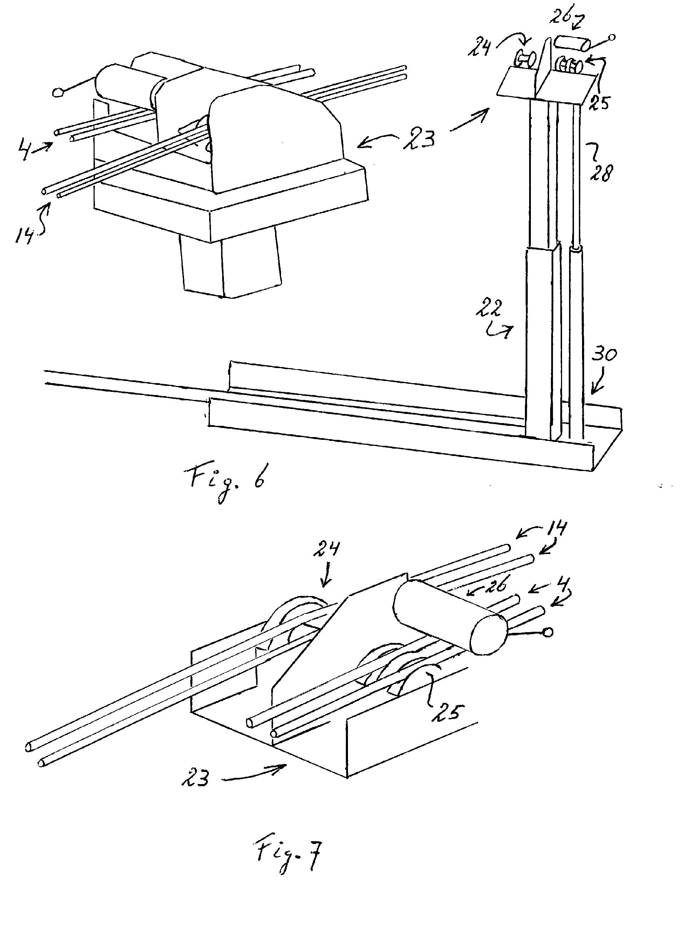

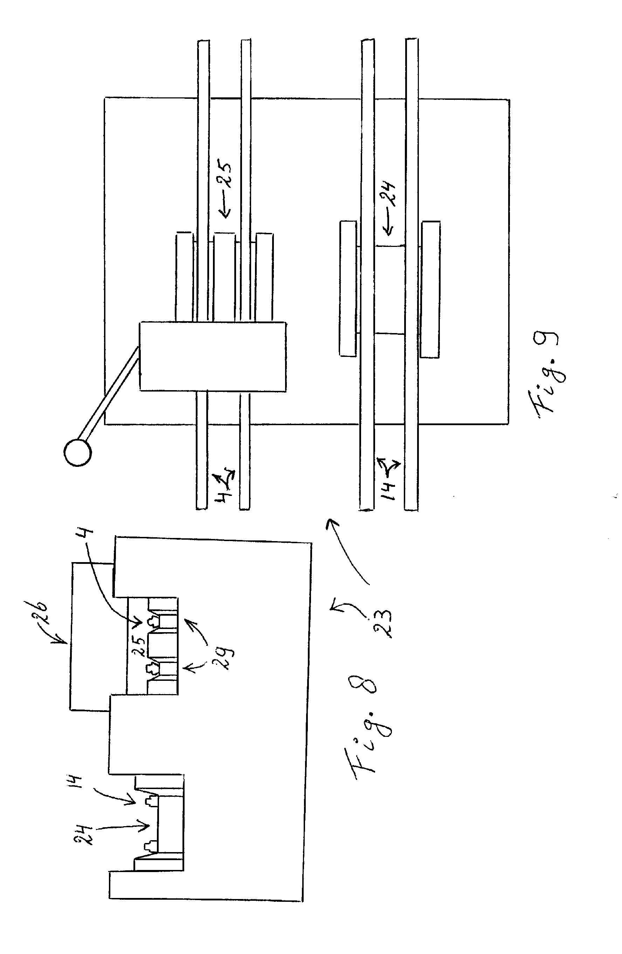

An alternative embodiment of the supply line processing unit 17 is shown in fig. 6-9. It has a telescoping extendable, upright column 22 (level adapting element) on top of which a roller unit 23 is mounted with two co-axial rollers 24, 25 (guides) with horizontal rotating axis, oriented perpendicular to the longitudinal direction of the supply line. Parallel above the roller 25 there is a restricting element/roller 26. At its lower end the column 22 is horizontally, normal to the longitudinal direction of the supply wire slidably mounted the the platform 16 by a side guide 30 at a location between its front and back. Displacement to the side or up, respectively, of the roller unit 23 happens by the aid of adapting elements, such as pneumatic or hydraulic rams 27 and 28, respecively.

The old supply line 14 rests onto the roller 24; the new supply line 4 rests onto the roller 25. At the location of the rollers 24, 25 the old en new supply lines 14, 4 are present at substantially the same level. The roller 25 contains twe parallel grooves 29, each to reliably hold and correctly position a supply wire 4. With the roller 26 it is avoided that the supply line 4 runs off roller 25.

During operation the level of the roller unit 23 is adapted to a convenient (operation)level relative to the operation floor of the platform 16 by extension of the column 22. With the ram 27 the roller unit is continuously displaced sideways depending on the sideways position of the supply line, determined by the zig-zag pattern thereof.

During one processing shift the old supply line is replaced, carrying out the following operations:
- A The old supply line, being at (operation)tension, is separated at the begin of the part that should be renewed. The free end of the new supply line coming from the drum of the winding-out unit 1 is mounted to the free end (at the separation) of the part of the old supply line that should be maintained (e.g. the one (ouside the reach of the pantograph) towards the line tensioning device extending part of the supply line); the free end (at the separation) of the part of the supply line to be renewed is mounted to the free end of a supply line part wound onto the drum 11 of the winding-in unit 3; this all such that the tension is substantially maintained in both the part to be maintained and the part to be replaced of the old supply line;
- B the new 4 and old 14 supply lines are positioned in the supply line processing unit 17 and the latter is positioned sideways and upward, according to the local operating position of the old supply line;
- C the unit 17 is advanced in the direction of travel (arrow A, fig. 1) along the track, wherein the unit 17 is continuously adapted sideways according to the local operating position of the old supply line;
- D an operator at the platform 16 at the front (related to the driving direction) of the unit 17 unscrews the old supply unit 14 from the subsequent supporting rope or the sideways horizontal tube, respectively (with the latter the supply line is kept in the horizontal zig-zag pattern) where the platform 16 arrives, such that the part of the old supply line 14 at the back of the unit 17 lacks any fixation to supporting ropes of sideways tubes; de sideways and upward position of the unit 17 is therewith adapted to the local operating position of the old supply line 14, such that the (operating)load which the old supply line 14 puts onto the supporting rope or sideways tube, respectively, which at that moment is unscrewed from said old supply line by said operator, is substantially removed while in the old supply line the (operating)tension substantially acts;
- E An operator at the platform 16 at the back of the unit 17 connects the new supply line 4 to each time a next supporting rope or sideways tube, respectively, which before was unscrewed from the old supply line 14, such that the part of the new supply line 4 at the front of the unit 17 is mounted to substantially all supporting ropes or sideways tubes; besides the sideways and upward position of the unit 17 is adapted to the local operating position of the new supply line 4 such that the (operating) load which the new supply line 4 is going to put on the supporting rope or sideways tube, respectively, which at that moment the operator connects to the new supply line, is substantially removed while the (operating)tension in the new supply line substantially acts (i.e. the new supply line can be mounted to the supporting rope or sideways tube while substantially (operating)tension acts wherein the unit 17 provides that at the time of mounting the connection point of the new supply line substantially corresponds to the relevant connection point of the supporting rope/sideways tube which is substantially unloaded at that time);
- F as soon as the platform 16 arrives at the opposite end of the to be replaced part of the old supply line 14, the old and new supply line are separated at that location and the free end of the new supply line, only shortly mounted to the supporting ropes and sideways tubes is fixed (at said separation) to the free end (at said separation) of the to be maintained part of the old supply line (e.g. the other (outside the reach of the pantograph) towards the next line tensioning device extending part of the supply line), such that in the old, to be maintained supply line acting (operating)load is substantaiily maintained.

Thus during replacement/renewal of the supply line the operating tension and its path shape (horizontal zig-zag) are substantially maintained. Consequently after replacement of the supply line no substantial (stretch)deformations occur in the renewed supply line, such that post-adaption of the mounting points with the supporting ropes and/or sideways tubes can reliably be avoided. Besides the operators can work quicker, since during assembly there is no need to pay attention to the future (stretch)deformations of the new supply line.

It will be appreciated that the above described fixing of the new supply line to the old supply line is no absolute requirement for this invention. E.g. this aspect is eliminated if the supply line is replaced over its complete length, thus included the parts extending towards the line tensioning device. In that case the new supply line can directly be mounted to the one line tensioning device and subsequently is mounted under operating tension to the supporting ropes and sideways tubes until the next line tensioning device.

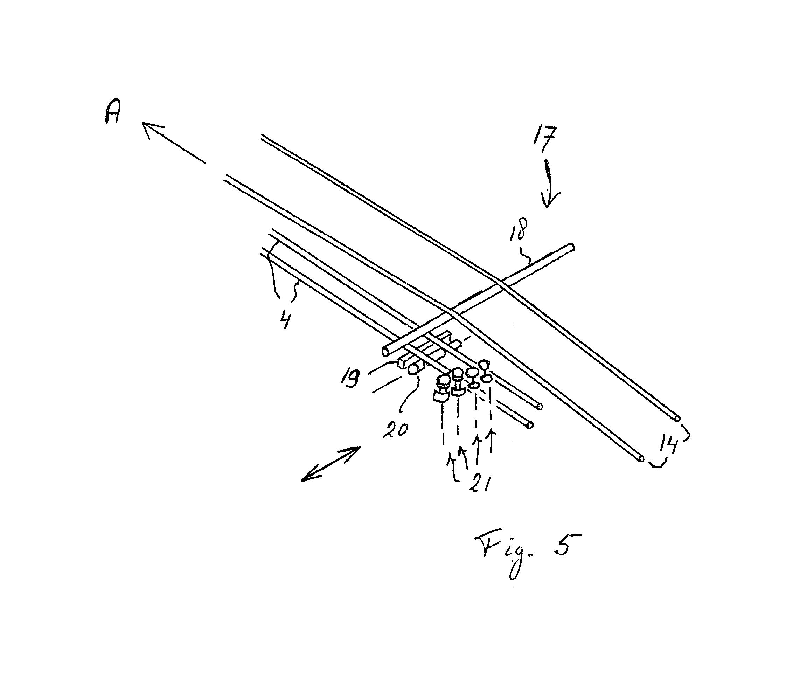

The invention also covers embodiments obtained from one or more separate aspects of the one above disclosed embodiments, possibly combined with one or more separate aspects of one or more of the other above disclosed embodiments. E.g. by combining the unit of fig. 5 with the sideways and/or upward adaption of the unit 17 of fig. 6, or by designing the supports 24, 25 such that the old supply line 14 is at a higher level than the new supply line 4 (or vice versa).

## Claims

1. Overhead supply line renewal device to renew an overhead supply line (14), displacable along the track en provided with a unit (1) to remove old supply line (14) and a unit (3) to supply new supply line (4) and with a unit (2) to disconnect the old supply line (14) from the suspension or mounting the new supply line (4) to the suspension, respectively.

2. Device according to claim 1, with a supply line lifting means (18; 24) with which the distance between the suspension rope or auxiliary suspension rope and the old (14) or new (4) supply line is decreased and with a positioning means (21; 25) with which the sideways position of the one or more supply lines (4, 14) is managed.

3. Device according to claim 2, wherein the supply line (4, 14) is guided in a groove in a guiding member (24, 25) and is present above a holding means (26).

4. Device according to claim 1, 2 or 3, wherein the lifting means (18; 24) and/or positioning means (21; 25) is mounted to have an adaptable level and/or sideways position, preferably in a telescoping manner.

5. Device according to claim 3, wherein the lifting means and/or postioning means are located in front of the front, behind the back or between front and back side of the platform (16).

6. Device according to any of the preceeding claims, with a winding-in (3) and/or a winding-out (1).

7. Device according to claim 6, with three separate displacable units (1, 2, 3) arranged as a train and containing the winding-in (3), a platform (16) and the winding-out (1), respectively.

8. Device according to claim 6 or 7, wherein the winding-out (1) has a tension sensor to record the tension acting in the supply line (4), wherein the recording by the sensor is supplied to a control unit (12) adapted to control the spinning speed of the drum (11) such that the tension acting in the supply line (4) can be controlled at a certain value or range during operation.

9. Device according to claim 6, 7 or 8, wherein the supply line (4, 14) extends substantially straight upward to the head (6) from the drum (11).

10. Method to replace the overhead supply line with the device according to any of the preceeding claims, comprising one or more of the steps A - F as disclosed in the part of the description before its last three paragraphs.
